# EUROPEAN PATENT APPLICATION

(11) **EP 3 693 941 A1**
(43) Date of publication of application: **12.08.2020**
(21) Application number: 19156080.4
(22) Date of filing: 07.02.2019
(51) Int. Cl.: G08G 1/14, G08G 1/065

(54) **A SYSTEM AND METHOD FOR GUIDING A VEHICLE OCCUPANT TO AN AVAILABLE VEHICLE PARKING SPACE**

(71) Applicant: Ningbo Geely Automobile Research & Development Co. Ltd., Hangzhou Bay New District Ningbo 315336 (CN)
(72) Inventor: NILSSON, Magnus, 448 37 FLODA (SE); LINDBERG NILSSON, Erik, 417 47 GÖTEBORG (SE)
(74) Representative: Zacco Sweden AB

(57) **Abstract**

A system, method and computer program product for method for guiding a vehicle occupant to an available vehicle parking. The method comprising determining a location of a first vehicle parking area (10) in relation to a location of the vehicle (5); obtaining a first vehicle parking status data (1vpa) of the first vehicle parking area (10); determining a location of a second vehicle parking area (20) in relation to the location of the vehicle (5); obtaining a second vehicle parking status data (2vpa) of the second vehicle parking area (20); and determining a recommended vehicle parking area out of the first vehicle parking area (10) or the second vehicle parking area (20) based on the location of the first vehicle parking area (10) and the first vehicle parking status data (1vpa), and the second location of the second vehicle parking area (20) and the second vehicle parking status data (2vpa).

## Description

### TECHNICAL FIELD

The disclosure pertains to the field of managing parking of vehicles.

### BACKGROUND

Vehicles are often used in areas where the vehicle traffic is dense and where there are sometimes not easy to find an available parking space for parking the vehicle. This is typically common in bigger cities. Vehicle parking areas can be found by following street signs close to the destination where the vehicle occupant would like to park the vehicle. Vehicle parking areas can also be found or suggested via a digital navigator in the vehicle, or via a connected map application that is run on e.g. a smartphone or tablet. There are also multi-storey vehicle parks that can signal via a sign that it is "full" or that there are "available" parking spaces. Sometimes, e.g. during busy hours it may not be that easy to find an available parking space. A normal behaviour is that the vehicle occupant starts to search for alternative parking in the area close to the destination. Sometimes the search for an available parking space takes a lot of time. The search for an alternative parking also contributes to the traffic situation. Parking spaces becomes available when a parked vehicle is leaving the parking space. In some vehicle parking areas parking spaces becomes available at a certain rate at a certain time of the day. Sooner or later a vehicle occupant hopefully finds an available parking space. Either the vehicle occupant finds an available parking space somewhere else or the vehicle occupant stay and wait at a certain vehicle parking area until a parking space becomes available when a parked vehicle is leaving the vehicle parking area.

### SUMMARY

There is a demand for an easier way to find an available parking space that both reduce the time spent for finding an available parking space, and that reduce the traffic generated by vehicles that drives around to find an available parking space. Today a vehicle occupant does not know if it is beneficial to stay and wait for a parking space to become available or to go searching for another parking space. Today if a vehicle occupant decides to go searching for an alternative parking space, the vehicle occupant doesn't always know where to start searching for an available parking space.

The disclosure proposes a vehicle parking management system for guiding a vehicle occupant to an available vehicle parking, the vehicle parking management system comprises a processing circuitry. The processing circuitry is configured to cause the vehicle parking management system to determine a location of a first vehicle parking area in relation to a location of the vehicle, obtain a first vehicle parking status data of the first vehicle parking area, determine a location of a second vehicle parking area in relation to the location of the vehicle and obtain a second vehicle parking status data of the second vehicle parking area. The processing circuitry is further configured to cause the vehicle parking management system to determine a recommended vehicle parking area out of the first vehicle parking area or the second vehicle parking area based on the location of the first vehicle parking area and the first vehicle parking status data, and the second location of the second vehicle parking area and the second vehicle parking status data. The location of vehicle parking areas in relation the location of the vehicle together with vehicle parking status data is used to determine the recommended vehicle parking area. The recommended vehicle parking area, out of the first vehicle parking area or the second vehicle parking area, can be used to help the vehicle occupant to save time and reduce unnecessary driving in search for an available parking space.

According to an aspect the processing circuitry is further configured to cause the vehicle parking management system to determine a location of at least a first vehicle parking area and at least a second vehicle parking area in relation to a destination location. According to an aspect the processing circuitry is further configured to cause the vehicle parking management system to determine a location of at least a first vehicle parking area in relation to a destination location and to the location of the vehicle.

According to an aspect the processing circuitry is further configured to cause the vehicle parking management system to determine a recommended vehicle parking area out of the first vehicle parking area (10) or the second vehicle parking area (20) based on the location of the first vehicle parking area (10) and the first vehicle parking status data (1vpa), and the second location of the second vehicle parking area (20), and the second vehicle parking status data (2vpa), and the destination location.

According to an aspect the vehicle parking management system further comprises a first vehicle parking status data controller configured to obtain at least one of the number of available vehicle parking spaces at the first vehicle parking area and the first average time to a new available parking space at the first vehicle parking area. The vehicle parking management system further comprises a second vehicle parking status data controller configured to obtain at least one of the number of available vehicle parking spaces at the second vehicle parking area and the second average time to a new available parking space at the second vehicle parking area. The processing circuitry is operatively connectable to the first vehicle parking status data controller and the second vehicle parking status data controller. The vehicle parking status data controllers obtains information regarding available parking spaces at respective vehicle parking areas. According to an aspect the vehicle parking status data controllers determines the average times when new available parking spaces becomes available at respectively parking area. This information is useful when determining a recommended vehicle parking area to be provided to the vehicle occupant.

According to an aspect the processing circuitry is further configured to display to a vehicle occupant, via a user interface, the determined recommended vehicle parking area for guiding the vehicle occupant. The display can be used to inform the vehicle occupant of the recommended vehicle parking area, e.g. by name but also by displaying e.g. a map illustrating the recommended vehicle parking area to the vehicle occupant.

According to an aspect the vehicle parking management system is further configured to determine a recommended vehicle parking area by determine a first travel time from the location of the vehicle to the location of the first vehicle parking area, determine a second travel time from the location of the vehicle to the location of the second vehicle parking area and compare the total time of the first travel time together with the first vehicle parking status data of the first vehicle parking area with the total time of the second travel time together with the second vehicle parking status data of the second vehicle parking area. This means that the recommended vehicle parking area can be determined based on travel time data, that is dependent on the distance and e.g. the traffic situation on the way to the vehicle parking area, but the recommended vehicle parking area can also be determined based on the available vehicle parking status data of the vehicle parking areas.

According to an aspect the vehicle parking management system is further configured to determine a recommended vehicle parking area by determine a first travel time from the location of the vehicle to the location of the first vehicle parking area, determine a first walking time from the location of the first vehicle parking area to the destination location, determine a second travel time from the location of the vehicle to the location of the second vehicle parking area, determine a second walking time from the location of the second vehicle parking area to the destination location, and compare the total time of the first travel time, the first walking time together with the first vehicle parking status data of the first vehicle parking area with the total time of the second travel time, the second walking time together with the second vehicle parking status data of the second vehicle parking area.

According to an aspect the first vehicle parking status data of the first vehicle parking area comprising at least one of the number of available vehicle parking spaces at the first vehicle parking area and a first average time to a new available parking space at the first vehicle parking area. The number of available vehicle parking spaces gives an indication on how likely it is to find an available parking space at the first parking area when reaching the first parking area, if the vehicle is currently not at the location of the first parking area. The knowledge of the number of available vehicle parking spaces in combination with the average time to a new available parking space at the first vehicle parking area results in a better prediction of how likely it is to find an available parking space at the first vehicle parking area when reaching the first parking area, if the vehicle is currently not at the location of the first parking area.

According to an aspect the second vehicle parking status data of the second vehicle parking area comprising at least one of the number of available vehicle parking spaces at the second vehicle parking area and the second average time to a new available parking space at the second vehicle parking area. The number of available vehicle parking spaces gives an indication on how likely it is to find an available parking space at the second parking area when reaching the second parking area, if the vehicle is currently not at the location of the second parking area. The knowledge of the number of available vehicle parking spaces in combination with the average time to a new available parking space at the second vehicle parking area results in a better prediction of how likely it is to find an available parking space at the second vehicle parking area when reaching the second parking area, if the vehicle is currently not at the location of the second parking area.

According to an aspect, in accordance with a determination that the sum of the first average time together with the first travel time is less than the sum of the second average time together with the second travel time, alerting the vehicle occupant via a user interface to stay and wait the average time for a new available parking space at the a first vehicle parking area, and in accordance with a determination that the sum of the first average time together with the first travel time is more than the sum of the second average time together with the second travel time, alerting the vehicle occupant via a user interface to navigate to the second vehicle parking area for a new available parking. This information guides the vehicle occupant to either stay and wait for an available parking space, or to go to the other vehicle parking area in order to save time.

The disclosure further proposes a method for guiding a vehicle occupant to an available vehicle parking. The method comprising determining a location of a first vehicle parking area in relation to a location of the vehicle and obtaining a first vehicle parking status data of the first vehicle parking area. The method further comprising determining a location of a second vehicle parking area in relation to the location of the vehicle and obtaining a second vehicle parking status data of the second vehicle parking area. The method further comprising determining a recommended vehicle parking area out of the first vehicle parking area or the second vehicle parking area based on the location of the first vehicle parking area and the first vehicle parking status data, and the second location of the second vehicle parking area and the second vehicle parking status data. The location of vehicle parking areas in relation the location of the vehicle together with vehicle parking status data is used to determine the recommended vehicle parking area. The recommended vehicle parking area, out of the first vehicle parking area or the second vehicle parking area, can be used to help the vehicle occupant to save time and reduce unnecessary driving in search for an available parking space.

According to an aspect the method further comprising displaying to a vehicle occupant, via a user interface, the determined recommended vehicle parking area for guiding the vehicle occupant. The display of the determined recommended vehicle parking area can be used to inform the vehicle occupant of the recommended vehicle parking area, e.g. by name but also by displaying e.g. a map illustrating the recommended vehicle parking area to the vehicle occupant.

According to an aspect determining a recommended vehicle parking area further comprising determining a first travel time from the location of the vehicle to the location of the first vehicle parking area, determining a travel time from the location of the vehicle to the location of the second vehicle parking area, and comparing the total time of the first travel time together with the first vehicle parking status data of the first vehicle parking area with the total time of the second travel time together with the second vehicle parking status data of the second vehicle parking area. This means that the recommended vehicle parking area can be determined based on travel time data, that is dependent on the distance and e.g. the traffic situation on the way to the vehicle parking area, but the recommended vehicle parking area can also be determined based on the available vehicle parking status data of the vehicle parking areas.

According to an aspect the first vehicle parking status data of the first vehicle parking area comprising at least one of the number of available vehicle parking spaces at the first vehicle parking area and a first average time to a new available parking space at the first vehicle parking area. The number of available vehicle parking spaces gives an indication on how likely it is to find an available parking space at the first parking area when reaching the first parking area, if the vehicle is currently not at the location of the first parking area. The knowledge of the number of available vehicle parking spaces in combination with the average time to a new available parking space at the first vehicle parking area results in a better prediction of how likely it is to find an available parking space at the first vehicle parking area when reaching the first parking area, if the vehicle is currently not at the location of the first parking area.

According to an aspect the second vehicle parking status data of the second vehicle parking area comprising at least one of the number of available vehicle parking spaces at the second vehicle parking area and a second average time to a new available parking space at the second vehicle parking area. The number of available vehicle parking spaces gives an indication on how likely it is to find an available parking space at the second parking area when reaching the second parking area, if the vehicle is currently not at the location of the second parking area. The knowledge of the number of available vehicle parking spaces in combination with the average time to a new available parking space at the second vehicle parking area results in a better prediction of how likely it is to find an available parking space at the second vehicle parking area when reaching the second parking area, if the vehicle is currently not at the location of the second parking area.

According to an aspect, in accordance with a determination that the sum of the first average time together with the first travel time is less than the sum of the second average time together with the second travel time, alerting the vehicle occupant via a user interface to stay and wait the average time for a new available parking space at the a first vehicle parking area, and in accordance with a determination that the sum of the first average time together with the first travel time is more than the sum of the second average time together with the second travel time, alerting the vehicle occupant via a user interface to navigate to the second vehicle parking area for a new available parking. This information guides the vehicle occupant to either stay and wait for an available parking space, or to go to the other vehicle parking area in order to save time.

According to an aspect the method further comprising displaying to a vehicle occupant, via a user interface, navigation directions to the determined recommended vehicle parking area. This will help the vehicle occupant to focus on the driving and to get to the determined recommended vehicle parking area as soon as possible without having to manually enter a destination address via the user interface.

The disclosure further proposes a computer program product comprising a non-transitory computer readable medium, having thereon a computer program comprising program instructions, the computer program being loadable into a processing circuitry and configured to cause execution of the method when the computer program is run by the processing circuitry.

### BRIEF DESCRIPTION OF THE DRAWINGS

The foregoing will be apparent from the following more particular description of the example embodiments, as illustrated in the accompanying drawings in which like reference characters refer to the same parts throughout the different views. The drawings are not necessarily to scale, emphasis instead being placed upon illustrating the example embodiments.
Figure 1a illustrates a first vehicle parking area and a second vehicle parking area according to an aspect of the disclosure.
Figure 1b illustrates a vehicle parking management system according to an aspect of the disclosure.
Figure 2 illustrates a flow chart of the method steps according to some aspects of the disclosure.
Figure 3 illustrates a computer program product according to some aspects of the disclosure.

### DETAILED DESCRIPTION

Aspects of the present disclosure will be described more fully hereinafter with reference to the accompanying drawings. The method and device disclosed herein can, however, be realized in many different forms and should not be construed as being limited to the aspects set forth herein. Like numbers in the drawings refer to like elements throughout.

The terminology used herein is for the purpose of describing particular aspects of the disclosure only, and is not intended to limit the disclosure. As used herein, the singular forms "a", "an" and "the" are intended to include the plural forms as well, unless the context clearly indicates otherwise.

In some implementations and according to some aspects of the disclosure, the functions or steps noted in the blocks can occur out of the order noted in the operational illustrations. For example, two blocks shown in succession can in fact be executed substantially concurrently or the blocks can sometimes be executed in the reverse order, depending upon the functionality/acts involved.

In the drawings and specification, there have been disclosed exemplary aspects of the disclosure. However, many variations and modifications can be made to these aspects without substantially departing from the principles of the present disclosure. Thus, the disclosure should be regarded as illustrative rather than restrictive, and not as being limited to the particular aspects discussed above. Accordingly, although specific terms are employed, they are used in a generic and descriptive sense only and not for purposes of limitation.

It should be noted that the word "comprising" does not necessarily exclude the presence of other elements or steps than those listed and the words "a" or "an" preceding an element do not exclude the presence of a plurality of such elements. It should further be noted that any reference signs do not limit the scope of the claims, that the example embodiments may be implemented at least in part by means of both hardware and software, and that several "means", "units" or "devices" may be represented by the same item of hardware.

Today, there is a demand for an easier way to find an available parking space that both reduce the time spent for finding an available parking space, and that reduce the traffic generated by vehicles that drives around to find an available parking space. Vehicle occupants does not always know if it is beneficial to stay and wait for a parking space to become available or to drive away and go searching for another parking space somewhere else. Today if a vehicle occupant decides to go searching for an alternative parking space, the vehicle occupant doesn't always know where to start searching for an available parking space.

An object of the present disclosure is to provide vehicle parking management system 100 for guiding a vehicle occupant to an available vehicle parking which seek to mitigate, alleviate, or eliminate one or more of the above-identified deficiencies in the art and disadvantages singly or in any combination. The disclosure will now be described in more detail with reference to illustrations in the Figures.

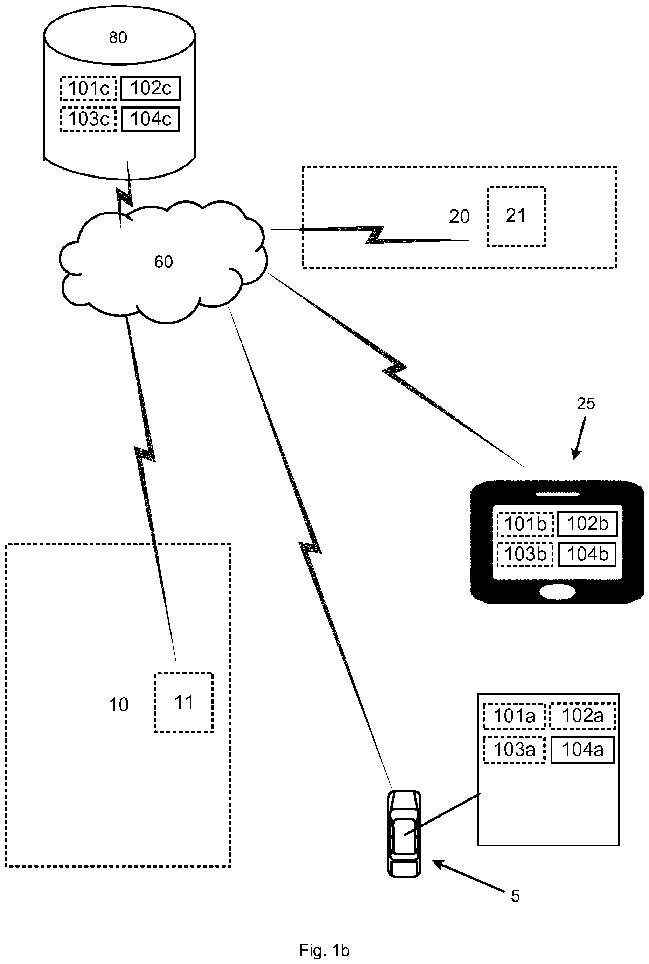

The disclosure proposes a vehicle parking management system 100, as illustrated in Figure 1b, for guiding a vehicle occupant to an available vehicle parking. The vehicle parking management system 100 comprises a processing circuitry 102a, 102b, 102c. According to an aspect, as illustrated in Figure 1b, the processing circuitry 102a, 102b, 102c is operatively connectable to a communication unit 104a, 104b, 104c adapted to communicate via a communication network 60.

According to an aspect the vehicle parking management system 100 further comprises a user interface 101a, 101b, 101c operatively connectable to the processing circuitry 102a, 102b, 102c. According to an aspect the user interface 101a, 101b, 101c is configured to output information to a vehicle occupant of the vehicle 5. According to an aspect the user interface 101a, 101b, 101c is configured to receive input information from a vehicle occupant of the vehicle 5. According to an aspect the user interface 101a, 101b, 101c is any of a touch sensitive display, a display combined with a keyboard or a voice controlled user interface.

According to an aspect vehicle parking management system 100 further comprises a memory 103a, 103b, 103c operatively connectable to the processing circuitry 102a, 102b, 102c. According to an aspect, as illustrated in Figure 1b, the memory 103a, 103b, 103c is operatively connectable to a communication unit 104a, 104b, 104c configured to communicate via a communication network 60.

In one example the communication network 60, as illustrated in Figure 1b, is a standardized wireless local area network such as a Wireless Local Area Network, WLAN, Bluetooth™, ZigBee, Ultra-Wideband, Near Field Communication, NFC, Radio Frequency Identification, RFID, or similar network. In one example the communication network 60 is a standardized wireless wide area network such as a Global System for Mobile Communications, GSM, Extended GSM, General Packet Radio Service, GPRS, Enhanced Data Rates for GSM Evolution, EDGE, Wideband Code Division Multiple Access, WCDMA, Long Term Evolution, LTE, Narrowband-loT, 5G, Worldwide Interoperability for Microwave Access, WiMAX or Ultra Mobile Broadband, UMB or similar network. The communication network 60 can also be a combination of both a local area network and a wide area network. The communication network 60 can also be a wired network. According to an aspect the communication network 60 is defined by common Internet Protocols.

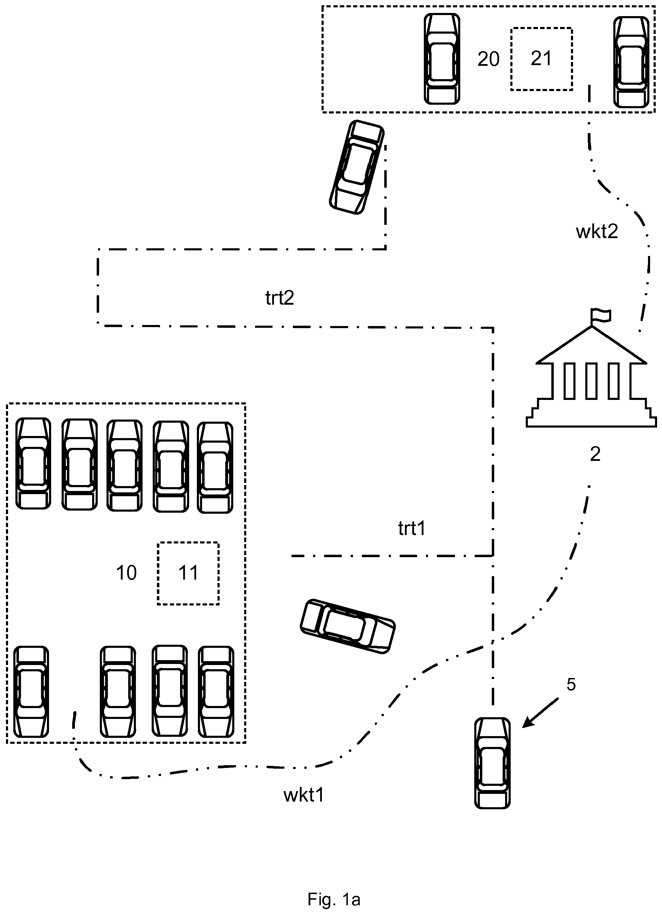

Figure 1b illustrates an exemplary vehicle parking management system 100 with a processing circuitry in a portable electronic device according to an aspect of the disclosure. In the example illustrated with Figure 1a, a portable electronic device 25, such as a smartphone or a tablet, with a processing circuitry 102b and a communication unit 104b, is connected to the communication unit 104a of the vehicle 5 via the communication network 60 for guiding a vehicle occupant to an available vehicle parking.

Figure 1b further illustrates an exemplary vehicle parking management system with a processing circuitry in a remote server according to an aspect of the disclosure. In the example illustrated with Figure 1b, a remote server 80, with a processing circuitry 102c and a communication unit 104c, is connected to the communication unit 104a of the vehicle 1 via the communication network 60 for guiding a vehicle occupant to an available vehicle parking.

According to an aspect, as illustrated in Figure 1b, the processing circuitry 102a is comprised in the vehicle 5.

The processing circuitry 102a, 102b, 102c is configured to cause the vehicle parking management system 100 to determine a location of a first vehicle parking area 10 in relation to a location of the vehicle 5, obtain a first vehicle parking status data 1vpa of the first vehicle parking area 10, determine a location of a second vehicle parking area 20 in relation to the location of the vehicle 5 and obtain a second vehicle parking status data 2vpa of the second vehicle parking area 20. According to an aspect, the location of the first vehicle parking area 10 is determined by establishing the location of the vehicle 5 followed by sending a request, comprising the location of the vehicle 5, to a server 80 for vehicle parking areas within a certain distance from the established location of the vehicle 5. According to an aspect the location of the vehicle 5 is obtained by a location detection device configured to provide the processing circuitry 102a, 102b, 102c with the current location of the vehicle 5. According to an aspect the location of the vehicle 5 obtained by a location detection device is comprised in the vehicle 5 or in a portable electronic device 25 configured to provide the processing circuitry 102a, 102b, 102c with the current location of the vehicle 5. According to an aspect the location detection device is a Global Positioning System receiver.

The processing circuitry 102a, 102b, 102c is further configured to cause the vehicle parking management system 100 to determine a recommended vehicle parking area out of the first vehicle parking area 10 or the second vehicle parking area 20 based on the location of the first vehicle parking area 10 and the first vehicle parking status data 1vpa, and the second location of the second vehicle parking area 20 and the second vehicle parking status data 2vpa. The location of vehicle parking areas in relation the location of the vehicle together with vehicle parking status data is used to determine the recommended vehicle parking area. The recommended vehicle parking area, out of the first vehicle parking area 10 or the second vehicle parking area 20, can be used to help the vehicle occupant to save time and reduce unnecessary driving in search for an available parking space. According to an aspect the location of the first vehicle parking area 10 or the second vehicle parking area 20 is obtained from a server 80. According to an aspect the location of the first vehicle parking area 10 or the second vehicle parking area 20 is obtained from a map database comprising location information of a plurality of vehicle parking areas. In one example the map database is stored in the memory 103a, 103b, 103c operatively connectable to the processing circuitry 102a, 102b, 102c.

According to an aspect the processing circuitry 102a, 102b, 102c is further configured to cause the vehicle parking management system 100 to determine a location of at least a first vehicle parking area 10 and at least a second vehicle parking area 20 in relation to a destination location 2. According to an aspect the processing circuitry 102a, 102b, 102c is further configured to cause the vehicle parking management system 100 to determine a location of at least a first vehicle parking area 10 and at least a second vehicle parking area 20 in relation a destination location 2 and to the location of the vehicle 5.

According to an aspect the processing circuitry 102a, 102b, 102c is further configured to cause the vehicle parking management system 100 to determine a recommended vehicle parking area out of the first vehicle parking area 10 or the second vehicle parking area 20 based on the location of the first vehicle parking area 10 and the first vehicle parking status data 1vpa, and the second location of the second vehicle parking area 20, and the second vehicle parking status data 2vpa, and the destination location 2.

According to an aspect the vehicle parking management system 100 further comprises a first vehicle parking status data controller 11 configured to obtain at least one of a the number of available vehicle parking spaces at the first vehicle parking area 10 and the first average time avtl to a new available parking space at the first vehicle parking area 10.

The vehicle parking management system 100 further comprises a second vehicle parking status data controller 21 configured to obtain at least one of the number of available vehicle parking spaces at the second vehicle parking area 20 and the second average time avt2 to a new available parking space at the second vehicle parking area 10.

The processing circuitry 102a, 102b, 102c is operatively connectable to the first vehicle parking status data controller 11 and the second vehicle parking status data controller 21. The vehicle parking status data controllers 11, 21 obtains information regarding available parking spaces at respective vehicle parking areas 10, 11. According to an aspect the vehicle parking status data controllers 11, 21 are used for determining the average times avtl, avt2 when new available parking spaces becomes available at respectively parking area 10, 20. This information is useful when determining a recommended vehicle parking area to be provided to the vehicle occupant. According to an aspect any of the first vehicle parking status data controller 11 and the second vehicle parking status data controller 21 comprises a camera sensor for monitoring any of the vehicles that are present at the vehicle parking area 10,20, or vehicles that are passing in or out of the vehicle parking area 10,20. According to an aspect any of the first vehicle parking status data controller 11 and the second vehicle parking status data controller 21 comprises a sensor configured to detect the presence of a vehicle within the vehicle parking area 10,20. According to an aspect the sensor is any of a camera sensor; a radar sensor; a LIDAR sensor; an infrared sensor; a metal detector sensor; an induction coil sensor; an infrared light sensor or any other sensor configured to detect the presence of a vehicle within the vehicle parking area 10,20. According to an aspect the sensor is further configured to detect a vehicle at a certain parking space within the vehicle parking area 10, 20.

In one example the vehicle parking status data controller 11, 21 is configured to control vehicles that are present at the vehicle parking area 10,20 via a vehicle parking fee system. In one example a vehicle occupant has to manually have to check in a vehicle to the vehicle parking fee system. In one example a vehicle is automatically checked in to the vehicle parking fee system.

According to an aspect the number of available parking spaces at the parking area 10, 20 in combination with average times avtl, avt2 when new available parking spaces becomes available is used for determining if the available parking spaces is increasing or decreasing over a certain time interval. In one example, the number of available parking spaces is used for determining a likelihood value for finding an available parking space when arriving to the parking area 10, 20.

According to an aspect the processing circuitry 102a, 102b, 102c is further configured to display to a vehicle occupant, via a user interface 400, the determined recommended vehicle parking area for guiding the vehicle occupant. The display can be used to inform the vehicle occupant of the recommended vehicle parking area, e.g. by name but also by displaying e.g. a map illustrating the recommended vehicle parking area to the vehicle occupant.

According to an aspect the vehicle parking management system 100 is further configured to determine a recommended vehicle parking area by determine a first travel time trt1 from the location of the vehicle 5 to the location of the first vehicle parking area 10, determine a second travel time trt2 from the location of the vehicle 5 to the location of the second vehicle parking area 20 and compare the total time of the first travel time trt1 together with the first vehicle parking status data 1vpa of the first vehicle parking area 10 with the total time of the second travel time trt2 together with the second vehicle parking status data 2vpa of the second vehicle parking area 20. This means that the recommended vehicle parking area can be determined based on travel time data trt1, trt2, that is dependent on the distance and e.g. the traffic situation on the way to the vehicle parking area, but the recommended vehicle parking area can also be determined based on the available vehicle parking status data 1vpa, 2vpa of the vehicle parking areas 10, 20. In one example the determination of the travel time trt1, trt2 is based on historic travel time data that is dependent on location of the vehicle 5 and the time of the day. According to an aspect, the travel time trt1, trt2 is based on recent travel time data by any previous vehicle that has been travelling from the location of the vehicle 5 to the location of the vehicle parking area 10, 20. According to an aspect the travel time trt1, trt2 is zero if the vehicle 5 is at the vehicle parking area 10, 20.

According to an aspect the vehicle parking management system 100 is further configured to determine a recommended vehicle parking area by determine a first travel time trt1 from the location of the vehicle 5 to the location of the first vehicle parking area 10, determine a first walking time wkt1 from the location of the first vehicle parking area 10 to the destination location 2, determine a second travel time trt2 from the location of the vehicle 5 to the location of the second vehicle parking area 20, determine a second walking time wkt2 from the location of the second vehicle parking area 20 to the destination location 2, and compare the total time of the first travel time trt1, the first walking time wkt1 together with the first vehicle parking status data 1vpa of the first vehicle parking area 10 with the total time of the second travel time trt2, the second walking time wkt2 together with the second vehicle parking status data 2vpa of the second vehicle parking area 20. This means that the total time including the walking time from the parking areas 10, 20 are taken in consideration when determining the recommended vehicle parking area. Figure 1a illustrates travel times trt1, trt2 and walking times wktl, wkt2.

According to an aspect the recommended vehicle parking area is determined based on the available vehicle parking status data 1vpa, 2vpa of the vehicle parking areas 10, 20. According to an aspect the recommended vehicle parking area is determined based on the available vehicle parking status data 1vpa, 2vpa of the vehicle parking areas 10, 20 and the walking times wktl, wkt2.

According to an aspect the first vehicle parking status data 1vpa of the first vehicle parking area 10 comprising at least one of the number of available vehicle parking spaces at the first vehicle parking area 10 and a first average time avtl to a new available parking space at the first vehicle parking area 10. The number of available vehicle parking spaces gives an indication on how likely it is to find an available parking space at the first parking area 10 when reaching the first parking area 10, if the vehicle 5 is currently not at the location of the first parking area 10. The knowledge of the number of available vehicle parking spaces in combination with the average time to a new available parking space avtl at the first vehicle parking area 10 results in a better prediction of how likely it is to find an available parking space at the first vehicle parking area 10 when reaching the first parking area 10, if the vehicle 5 is currently not at the location of the first parking area 10. In one example there is only one available parking space. In theory the waiting time to a new available parking space is zero. The time to a new available parking space avtl may however not be set to zero depending on the actual time to a new available parking space avtl, since e.g. during busy hours one available parking space is occupied within a short time frame. In one example a vehicle parking area has 260 available parking spaces. Again, depending on the actual time to a new available parking space avtl, the time to a new available parking space avtl may not be set to zero, however in one example if the number of available parking spaces exceeds a certain number and if the time to a new available parking space avtl exceeds a certain time, then the time to a new available parking space avtl is set to zero.

According to an aspect the second vehicle parking status data 2vpa of the second vehicle parking area 20 comprising at least one of the number of available vehicle parking spaces at the second vehicle parking area 20 and the second average time avt2 to a new available parking space at the second vehicle parking area 20. The number of available vehicle parking spaces gives an indication on how likely it is to find an available parking space at the second parking area 20 when reaching the second parking area 20, if the vehicle 5 is currently not at the location of the second parking area 20. The knowledge of the number of available vehicle parking spaces in combination with the average time to a new available parking space avt2 at the second vehicle parking area 20 results in a better prediction of how likely it is to find an available parking space at the second vehicle parking area 20 when reaching the second parking area 20, if the vehicle 5 is currently not at the location of the second parking area 20.

According to an aspect, in accordance with a determination that the sum of the first average time avtl together with the first travel time trt1 is less than the sum of the second average time avt2 together with the second travel time trt2, alerting the vehicle occupant via a user interface 400 to stay and wait the average time avtl for a new available parking space at the a first vehicle parking area 10, and in accordance with a determination that the sum of the first average time avtl together with the first travel time trt1 is more than the sum of the second average time avt2 together with the second travel time trt2, alerting the vehicle occupant via a user interface 400 to navigate to the second vehicle parking area 20 for a new available parking. This information guides the vehicle occupant to either stay and wait for an available parking space, or to go to the other vehicle parking area in order to save time.

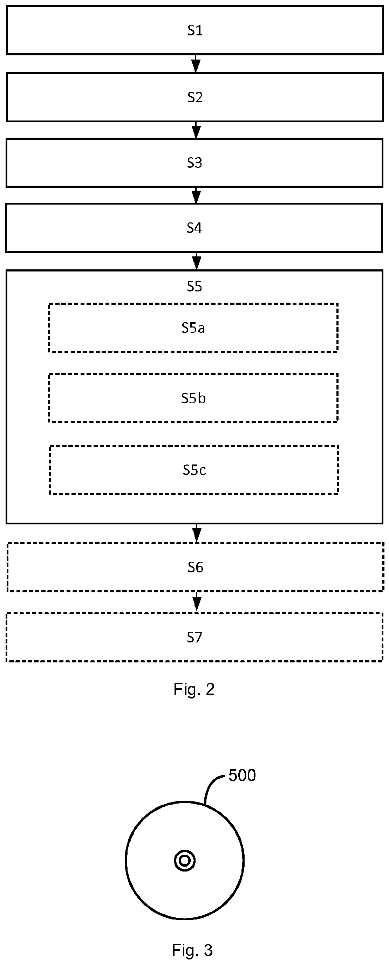

The disclosure further proposes a method for guiding a vehicle occupant to an available vehicle parking. The method is illustrated in figure 2. The method comprising the step of S1 determining a location of a first vehicle parking area 10 in relation to a location of the vehicle 5 and the step of S2 obtaining a first vehicle parking status data 1vpa of the first vehicle parking area 10. The method further comprising the step of S3 determining a location of a second vehicle parking area 20 in relation to the location of the vehicle 5 and the step of S4 obtaining a second vehicle parking status data 2vpa of the second vehicle parking area 20. The method further comprising the step of S5 determining a recommended vehicle parking area out of the first vehicle parking area 10 or the second vehicle parking area 20 based on the location of the first vehicle parking area 10 and the first vehicle parking status data 1vpa, and the second location of the second vehicle parking area 20 and the second vehicle parking status data 2vpa. The location of vehicle parking areas in relation the location of the vehicle together with vehicle parking status data is used to determine the recommended vehicle parking area. The recommended vehicle parking area, out of the first vehicle parking area 10 or the second vehicle parking area 20, can be used to help the vehicle occupant to save time and reduce unnecessary driving in search for an available parking space.

The method comprising the step of S1 determining a location of a first vehicle parking area 10 in relation to a location of the vehicle 5 and the step of S2 obtaining a first vehicle parking status data 1vpa of the first vehicle parking area 10. The method further comprising the step of S3 determining a location of a second vehicle parking area 20 in relation to the location of the vehicle 5 and the step of S4 obtaining a second vehicle parking status data 2vpa of the second vehicle parking area 20. The method further comprising the step of determining a location of a third vehicle parking area in relation to the location of the vehicle 5 and the step of obtaining a third vehicle parking status data of the third vehicle parking area. The method further comprising the step of S5 determining a recommended vehicle parking area out of the first vehicle parking area 10, the second vehicle parking area 20, or the third vehicle parking area based on the location of the first vehicle parking area 10 and the first vehicle parking status data 1vpa, and the second location of the second vehicle parking area 20 and the second vehicle parking status data 2vpa, and the third location of the third vehicle parking area and the third vehicle parking status data. This means that a plurality of vehicle parking areas can be considered when determining a recommended vehicle parking area out.

According to an aspect a final destination is taken into consideration that is a different destination from the first or second parking area. In such example, a further time aspect, such as walking time to the final destination after parking the vehicle at the vehicle parking area is also taken into consideration when determining a recommended vehicle parking area.

According to an aspect a vehicle parking status data controller 11,21 is configured to obtain at least one of the number of available vehicle parking spaces at the vehicle parking area 10, 20 and vehicle parking status data 1vpa, 2vpa.

According to an aspect the vehicle parking status data 1vpa, 2vpa is determined by monitoring vehicles within a vehicle parking area 10, 20. According to an aspect the location of vehicles within a vehicle parking area 10, 20 is continuously monitored. According to an aspect the vehicle parking status data 1vpa, 2vpa comprising status information of a vehicle at a certain location. In one example status information of a vehicle is sent from a vehicle to a server 80 of the vehicle parking management system 100 via a communication network 60. According to an aspect the location of a vehicle within a vehicle parking area 10, 20 is determined by a position sensor configured to determine the geographical position of the vehicle. In one example the position sensor is a Global Positioning System, GPS, sensor installed in the vehicle. In one example the position sensor is a Global Positioning System, GPS, sensor installed in a portable electronic device 25, such as a smartphone or a tablet, that is in the vicinity of the vehicle occupant and the vehicle for determining the geographical position of the vehicle.

According to an aspect, in accordance with a determination that the location of a vehicle within a vehicle parking area 10, 20 has not changed after a certain time, results in a determination that the vehicle is parked. In one example if the location of a vehicle within a vehicle parking area 10, 20 has not changed after 15 minutes the vehicle is considered to be parked.

According to an aspect, in accordance with a determination that the location of a vehicle within a vehicle parking area 10, 20 has changed after a certain time, results in a determination that the vehicle is not parked. According to an aspect, in accordance with a determination that a vehicle that has been parked within a vehicle parking area 10, 20 starts to move, results in a determination that a vehicle parking space has become available. According to an aspect, in accordance with a determination that a motor of a vehicle within a vehicle parking area 10, 20 has to been turned off results in a determination that the vehicle is parked.

According to an aspect a vehicle parking status data 1vpa, 2vpa is obtained from a server 80. According to an aspect vehicle parking status data 1,vpa, 2vpa is generated by a vehicle occupant via a manual input of information, associated with a parked vehicle, via a user interface of any of a vehicle or a portable electronic device.

According to an aspect a vehicle parking area 10, 20 is defined by geographical coordinates for defining a geo-fence of the vehicle parking area 10, 20.

According to an aspect the vehicle parking status data 1vpa, 2vpa is generated when a motor of a vehicle is turned off by obtaining the geographical position of the vehicle where the motor of the vehicle was turned off. In one example the vehicle parking status data 1vpa, 2vpa is generated a certain time after the motor of a vehicle has been turned off by obtaining the geographical position of the vehicle where the motor of the vehicle was turned off.

According to an aspect information about a vehicle that is moving within a vehicle parking area 10, 20 is part of the vehicle parking status data 1vpa, 2vpa. In one example a vehicle that is moving within a vehicle parking area 10, 20 that has not been parked within the vehicle parking area 10, 20, is considered to be searching for an available parking space within the vehicle parking area 10, 20. In one example, the probability to find an available parking space is decreasing when the number of vehicles that are searching for a parking space within a vehicle parking area 10, 20 is increasing. The information regarding the number of vehicles that are searching for an available parking space within the vehicle parking area 10, 20 can be part of the vehicle parking status data 1vpa, 2vpa.

According to an aspect the vehicle parking status data 1vpa, 2vpa is determined based on a flow of vehicles into a certain geographical area in combination with the flow of vehicles out from the certain geographical area. In one example the flow of vehicles into, and out from, the certain geographical area change over time and in one example the change of the flow is indicating the current change in the vehicle parking status data 1vpa, 2vpa. For example if the flow of vehicles into the certain geographical area at a certain time period is 91 vehicles while the flow out from the certain geographical area at the same period is 81, then this data can be used for predicting a longer waiting time, and if the flow of vehicles into the certain geographical area at a certain time period is 23 vehicles while the flow out from the certain geographical area at the same period is 104, then this data can be used for predicting a shorter, or no waiting time. In one example the geographical area is a specific vehicle parking area but the geographical area can also be a wider area covering a plurality of vehicle parking areas. In one example the flow of vehicles into a certain geographical area in combination with the flow of vehicles out from the certain geographical area is determined by position sensors in the vehicles. In one example the position sensor is a Global Positioning System, GPS, sensor installed in the vehicle. In one example the position sensor is a Global Positioning System, GPS, sensor installed in a portable electronic device 25, such as a smartphone or a tablet, that is in the vicinity of the vehicle occupant and the vehicle, for determining the geographical position of the vehicle.

According to an aspect, in accordance with a determination that a certain vehicle is parked at the same certain vehicle parking space repeatedly within a certain time period, the certain vehicle parking space is considered to be a private vehicle parking space. In one example a private vehicle parking space is not considered to be available at any time.

According to an aspect the vehicle parking status data 1vpa, 2vpa is generated based on historical data with respect to the vehicle parking area 10, 20. According to an aspect, historical data with respect to the vehicle parking area 10, 20 is stored at a server 80. In one example the historical data with respect to the vehicle parking area 10, 20 is used for determining vehicle parking status data 1vpa, 2vpa for certain time of the day a certain time of the week. In one example historical data with respect specific holidays is used for determining vehicle parking status data 1vpa, 2vpa for certain time of the day a certain time of the week. The vehicle parking status data 1vpa, 2vpa can then be predicted based on the historical data.

According to an aspect the method further comprising the step of S6 displaying to a vehicle occupant, via a user interface 400, the determined recommended vehicle parking area for guiding the vehicle occupant. The display of the determined recommended vehicle parking area can be used to inform the vehicle occupant of the recommended vehicle parking area, e.g. by name but also by displaying e.g. a map illustrating the recommended vehicle parking area to the vehicle occupant. In one example the map includes a likelihood percentage figure of the certainty to find an available parking space at the recommended vehicle parking area 10, 20. In one example the percentage figure is based on the determination of the recommended vehicle parking area 10, 20 based vehicle parking status data 1vpa, 2vpa.

According to an aspect the historical data with respect to the vehicle parking area 10, 20 can be used for e.g. planning a trip to a destination. Based on historical data with respect to the vehicle parking area 10, 20 a vehicle occupant can elaborate on the arrival time to see different likelihood percentage figures of the certainty to find an available parking space at the recommended vehicle parking area at a certain time. In one example at a certain vehicle parking area, the likelihood percentage figure of the certainty to find an available parking space is 88% at 07:10, the likelihood percentage figure of the certainty to find an available parking space is 6% at the same parking area at 08:45.

According to an aspect the vehicle parking status data 1vpa, 2vpa is generated by a statistical model. According to an aspect the statistical model is based on the number of vehicles that have entered a certain vehicle parking area 10, 20 during a certain time period. According to an aspect the statistical model is further based on the number of vehicles that have left a certain vehicle parking area 10, 20 during a certain time period. According to an aspect the statistical model is further based on the total number of vehicle parking spaces at the certain vehicle parking area 10, 20.

According to an aspect the time from entering the vehicle parking area 10, 20 to the time when the vehicle has been parked within the vehicle parking area 10, 20 is part of the vehicle parking status data 1vpa, 2vpa. In one example the travel time to an available parking space at the vehicle parking area 10, 20 is dependent on the size of the vehicle parking area 10, 20. There are also sometimes different alterative paths that can be used in order to get to the available parking space. According to an aspect a detailed view of the vehicle parking area 10, 20 is displayed to a vehicle occupant, via the user interface 400, for guiding the vehicle occupant to use a certain path at the vehicle parking area 10, 20. At large vehicle parking area 10, 20 it can otherwise be difficult to know where the available parking spaces are located. In the illustration in figure 1a the available parking space at the vehicle parking area 10 may be difficult to see by the vehicle occupant of the vehicle 5 that is about to enter the vehicle parking area 10. In one example a detailed view of the vehicle parking area 10 is displayed to a vehicle occupant of the vehicle 5, via a user interface 400, for guiding the vehicle occupant to use a certain path at the vehicle parking area 10 to find the available parking space. In one example there may be a plurality of entry points that can be used to access the vehicle parking area 10 that are viewed in the detailed view of the vehicle parking area 10.

According to an aspect determining a recommended vehicle parking area further comprising the step of S5a determining a first travel time trt1 from the location of the vehicle 5 to the location of the first vehicle parking area 10, the step of S5b determining a travel time trt2 from the location of the vehicle 5 to the location of the second vehicle parking area 20, and the step of S5c comparing the total time of the first travel time trt1 together with the first vehicle parking status data 1vpa of the first vehicle parking area 10 with the total time of the second travel time trt2 together with the second vehicle parking status data 2vpa of the second vehicle parking area 20. This means that the recommended vehicle parking area can be determined based on travel time data trt1, trt2, that is dependent on the distance and e.g. the traffic situation on the way to the vehicle parking area, but the recommended vehicle parking area can also be determined based on the available vehicle parking status data 1vpa, 2vpa of the vehicle parking areas 10, 20. According to an aspect the travel time trt1, trt2 is determined based on traffic information obtained from a server 80. According to an aspect the travel time trt1, trt2 is determined based on real time traffic information obtained from a server 80. According to an aspect the travel time trt1, trt2 is determined based on historical traffic information obtained from a server 80.

According to an aspect the first vehicle parking status data 1vpa of the first vehicle parking area 10 comprising at least one of the number of available vehicle parking spaces at the first vehicle parking area 10 and a first average time avtl to a new available parking space at the first vehicle parking area 10. The number of available vehicle parking spaces gives an indication on how likely it is to find an available parking space at the first parking area 10 when reaching the first parking area 10, if the vehicle 5 is currently not at the location of the first parking area 10. The knowledge of the number of available vehicle parking spaces in combination with the average time to a new available parking space avtl at the first vehicle parking area 10 results in a better prediction of how likely it is to find an available parking space at the first vehicle parking area 10 when reaching the first parking area 10, if the vehicle 5 is currently not at the location of the first parking area 10.

According to an aspect the second vehicle parking status data 2vpa of the second vehicle parking area 20 comprising at least one of the number of available vehicle parking spaces at the second vehicle parking area 20 and a second average time avt2 to a new available parking space at the second vehicle parking area 20. The number of available vehicle parking spaces gives an indication on how likely it is to find an available parking space at the second parking area 20 when reaching the second parking area 20, if the vehicle 5 is currently not at the location of the second parking area 20. The knowledge of the number of available vehicle parking spaces in combination with the average time to a new available parking space avt2 at the second vehicle parking area 20 results in a better prediction of how likely it is to find an available parking space at the second vehicle parking area 20 when reaching the second parking area 20, if the vehicle 5 is currently not at the location of the second parking area 20.

According to an aspect, in accordance with a determination that the sum of the first average time avtl together with the first travel time trt1 is less than the sum of the second average time avt2 together with the second travel time trt2, alerting the vehicle occupant via a user interface 400 to stay and wait the average time avtl for a new available parking space at the a first vehicle parking area 10, and in accordance with a determination that the sum of the first average time avtl together with the first travel time trt1 is more than the sum of the second average time avt2 together with the second travel time trt2, alerting the vehicle occupant via a user interface 400 to navigate to the second vehicle parking area 20 for a new available parking. This information guides the vehicle occupant to either stay and wait for an available parking space, or to go to the other vehicle parking area in order to save time.

According to an aspect the method further comprising displaying to a vehicle occupant, via a user interface 400, navigation directions to the determined recommended vehicle parking area. This will help the vehicle occupant to focus on the driving and to get to the determined recommended vehicle parking area as soon as possible without having to manually enter a destination address via the user interface 400.

The disclosure further proposes a computer program product 500 comprising a non-transitory computer readable medium, having thereon a computer program comprising program instructions, the computer program being loadable into a processing circuitry 102a, 102b, 102c and configured to cause execution of the method when the computer program is run by the processing circuitry 102a, 102b, 102c.

An example use case will now be described. Reference is made to figure 1a. In the morning a vehicle occupant decides to go to a museum 2 in the city. The vehicle occupant enters the destination to the museum 2 and starts navigating the vehicle 5 to the museum. There are a plurality of vehicle parking areas close to the museum. When approaching the museum 2, just a few kilometers from the museum, the vehicle parking management system 100 determines the location of the different vehicle parking areas in relation to the vehicle 5 that the vehicle occupant is in. The vehicle parking management system 100 further obtains vehicle parking status data 1vpa, 2vpa of the different vehicle parking areas 10, 20. The vehicle parking management system determines a first vehicle parking area 10 that currently has an average time to a new available parking space that is 7 minutes. The travel time trt1 to the first vehicle parking area 10 from the current position of the vehicle 5 is 3 minutes. The walking time wkt1 from the location of the first vehicle parking area 10 to the museum 2 is 4 minutes. The vehicle parking management system further determines a second vehicle parking area 20 that currently has an average time to a new available parking space that is 1 minute. The travel time trt2 to the second vehicle parking area 20 from the current position of the vehicle 5 is 6 minutes. The walking time wkt2 from the location of the second vehicle parking area 20 to the museum 2 is 3 minutes. It is determined by the vehicle parking management system 100 that it is faster to find an available parking space at the second vehicle parking area 20, considering the time to travel and the average time to a new available parking space for the two parking areas. It is also determined that when adding the walking time wkt2 the second vehicle parking area 20 is still considered to be the recommended vehicle parking area. The vehicle parking management system 100 is displaying, via a user interface 400, the determined recommended vehicle parking area to be the second vehicle parking area 20 and guides the vehicle occupant to the second vehicle parking area 20.

The disclosure further proposes, as illustrated in figure 3, a computer program product 500 comprising a non-transitory computer readable medium, having thereon a computer program comprising program instructions, the computer program being loadable into a processing circuitry 102a, 102b, 102c and configured to cause execution of the method when the computer program is run by the at least one processing circuitry 102a, 102b, 102c.

According to an aspect the vehicle parking management system 100 is configured to carry out any or more of the aspects of the described method. According to an aspect of the disclosure, the method is carried out by instructions in a software program that is downloaded and run in the vehicle parking management system 100.

In the drawings and specification, there have been disclosed exemplary embodiments. However, many variations and modifications can be made to these embodiments. Accordingly, although specific terms are employed, they are used in a generic and descriptive sense only and not for purposes of limitation, the scope of the embodiments being defined by the following claims.

## Claims

1. A method for guiding a vehicle occupant to an available vehicle parking, the method comprising:
- (S1) determining a location of a first vehicle parking area (10) in relation to a location of the vehicle (5);
- (S2) obtaining a first vehicle parking status data (1vpa) of the first vehicle parking area (10);
- (S3) determining a location of a second vehicle parking area (20) in relation to the location of the vehicle (5);
- (S4) obtaining a second vehicle parking status data (2vpa) of the second vehicle parking area (20); and
- (S5) determining a recommended vehicle parking area out of the first vehicle parking area (10) or the second vehicle parking area (20) based on the location of the first vehicle parking area (10) and the first vehicle parking status data (1vpa), and the second location of the second vehicle parking area (20) and the second vehicle parking status data (2vpa).

2. The method according to claim 1, the method further comprising:
- (S6) displaying to a vehicle occupant, via a user interface (400), the determined recommended vehicle parking area for guiding the vehicle occupant.

3. The method according to any of the preceding claims, wherein determining a recommended vehicle parking area further comprising
- (S5a) determining a first travel time (trt1) from the location of the vehicle (5) to the location of the first vehicle parking area (10);
- (S5b) determining a second travel time (trt2) from the location of the vehicle (5) to the location of the second vehicle parking area (20); and
- (S5c) comparing the total time of the first travel time (trt1) together with the first vehicle parking status data (1vpa) of the first vehicle parking area (10) with the total time of the second travel time (trt2) together with the second vehicle parking status data (2vpa) of the second vehicle parking area (20).

4. The method according to claim 3, wherein the first vehicle parking status data (1vpa) of the first vehicle parking area (10) comprising at least one of the number of available vehicle parking spaces at the first vehicle parking area (10) and a first average time (avtl) to a new available parking space at the first vehicle parking area (10).

5. The method according to claim 3, wherein the second vehicle parking status data (2vpa) of the second vehicle parking area (20) comprising at least one of the number of available vehicle parking spaces at the second vehicle parking area (20) and a second average time (avt2) to a new available parking space at the second vehicle parking area (20).

6. The method according to claims 4 and 5, wherein:
- in accordance with a determination that the sum of the first average time (avtl) together with the first travel time (trt1) is less than the sum of the second average time (avt2) together with the second travel time (trt2), alerting the vehicle occupant via a user interface (400) to stay and wait the average time (avtl) for a new available parking space at the a first vehicle parking area (10); and
- in accordance with a determination that the sum of the first average time (avtl) together with the first travel time (trt1) is more than the sum of the second average time (avt2) together with the second travel time (trt2), alerting the vehicle occupant via a user interface (400) to navigate to the second vehicle parking area (20) for a new available parking.

7. The method according to claim 1, the method further comprising:
- (S7) displaying to a vehicle occupant, via a user interface (400), navigation directions to the determined recommended vehicle parking area.

8. A vehicle parking management system (100) for guiding a vehicle occupant to an available vehicle parking, the vehicle parking management system (100) comprises:
• a processing circuitry (102a, 102b, 102c) configured to cause the vehicle parking management system (100) to:
- determine a location of a first vehicle parking area (10) in relation to a location of the vehicle (5);
- obtain a first vehicle parking status data (1vpa) of the first vehicle parking area (10);
- determine a location of a second vehicle parking area (20) in relation to the location of the vehicle (5);
- obtain a second vehicle parking status data (2vpa) of the second vehicle parking area (20); and
- determine a recommended vehicle parking area out of the first vehicle parking area (10) or the second vehicle parking area (20) based on the location of the first vehicle parking area (10) and the first vehicle parking status data (1vpa), and the second location of the second vehicle parking area (20) and the second vehicle parking status data (2vpa).

9. The vehicle parking management system (100) according to claim 8 further comprises:
• a first vehicle parking status data controller (11) configured to obtain at least one of the number of available vehicle parking spaces at the first vehicle parking area (10) and the first average time (avtl) to a new available parking space at the first vehicle parking area (10); and
• a second vehicle parking status data controller (21) configured to obtain at least one of a the number of available vehicle parking spaces at the second vehicle parking area (20) and the second average time (avt2) to a new available parking space at the second vehicle parking area (10)
wherein the processing circuitry (102a, 102b, 102c) is operatively connectable to the first vehicle parking status data controller (11) and the second vehicle parking status data controller (21).

10. The vehicle parking management system (100) according to any of the claims 8-9 wherein the processing circuitry (102a, 102b, 102c) is further configured to:
- display to a vehicle occupant, via a user interface (400), the determined recommended vehicle parking area for guiding the vehicle occupant.

11. The vehicle parking management system (100) according to any of the claims 8-10 the processing circuitry (102a, 102b, 102c) is further configured to determine a recommended vehicle parking area by:
- determine a first travel time (trt1) from the location of the vehicle (5) to the location of the first vehicle parking area (10);
- determine a travel time (trt2) from the location of the vehicle (5) to the location of the second vehicle parking area (20); and
- compare the total time of the first travel time (trt1) together with the first vehicle parking status data (1vpa) of the first vehicle parking area (10) with the total time of the second travel time (trt2) together with the second vehicle parking status data (2vpa) of the second vehicle parking area (20).

12. The vehicle parking management system (100) according to claim 11 wherein the first vehicle parking status data (1vpa) of the first vehicle parking area (10) comprising at least one of the number of available vehicle parking spaces at the first vehicle parking area (10) and a first average time (avtl) to a new available parking space at the first vehicle parking area (10).

13. The vehicle parking management system (100) according to claim 11 wherein the second vehicle parking status data (2vpa) of the second vehicle parking area (20) comprising at least one of the number of available vehicle parking spaces at the second vehicle parking area (20) and the second average time (avt2) to a new available parking space at the second vehicle parking area (20).

14. The vehicle parking management system (100) according claims 12 and 13, wherein:
- in accordance with a determination that the sum of the first average time (avtl) together with the first travel time (trt1) is less than the sum of the second average time (avt2) together with the second travel time (trt2), alerting the vehicle occupant via a user interface (400) to stay and wait the average time (avtl) for a new available parking space at the a first vehicle parking area (10); and
- in accordance with a determination that the sum of the first average time (avtl) together with the first travel time (trt1) is more than the sum of the second average time (avt2) together with the second travel time (trt2), alerting the vehicle occupant via a user interface (400) to navigate to the second vehicle parking area (20) for a new available parking.

15. A computer program product (500) comprising a non-transitory computer readable medium, having thereon a computer program comprising program instructions, the computer program being loadable into a processing circuitry (102a, 102b, 102c) and configured to cause execution of the method according to any of claims 1 through 7 when the computer program is run by the processing circuitry (102a, 102b, 102c).
